# EUROPÄISCHE PATENTSCHRIFT

(11) **EP 3 928 494 B1**
(45) Veröffentlichungstag und Bekanntmachung des Hinweises auf die Patenterteilung: **09.10.2024**
(21) Anmeldenummer: 20710813.5
(22) Anmeldetag: 28.02.2020
(51) Int. Cl.: H04L 67/12, H01H 9/16, H01H 9/00, H01H 11/00, H01H 71/04

(54) **ÜBERWACHUNGSANORDNUNG UND VERFAHREN ZUR ÜBERWACHUNG**
MONITORING ASSEMBLY AND METHOD FOR MONITORING
SYSTÈME DE SURVEILLANCE ET PROCÉDÉ DE SURVEILLANCE

(30) Priorität: 28.03.2019 DE 102019204385
(43) Veröffentlichungstag der Anmeldung: 29.12.2021
(73) Patentinhaber: Siemens Energy Global GmbH & Co. KG, 81739 München (DE)
(72) Erfinder: GIERE, Stefan, 14612 Falkensee (DE); HEINECKE, Matthias, 14163 Berlin (DE); KNUTH, Robert, 13587 Berlin (DE)
(86) Internationale Anmeldenummer: PCT/EP2020/055240
(87) Internationale Veröffentlichungsnummer: WO 2020/193067

(56) Entgegenhaltungen:
- DE-A1- 102017 206 769
- US-A1- 2014 012 523
- "IEEE Guide for Gas-Insulated Substations Rated Above 52 kV;IEEE Std C37.122.1-2014 (Revision of IEEE Std C37.122.1-1993)", IEEE STANDARD, IEEE, PISCATAWAY, NJ, USA, 5 December 2014 (2014-12-05), pages 1 - 82, XP068071842, ISBN: 978-0-7381-9379-3
- JUNG T ET AL: "Implementation of new monitoring tools and optimisation of maintenance through the use of Web-based technology", TRANSMISSION AND DISTRIBUTION CONFERENCE AND EXPOSITION: LATIN AMERICA , 2004 IEEE/PES SAO PAULO, BRAZIL 8-11 NOV. 2004, PISCATAWAY, NJ, USA,IEEE, US, 8 November 2004 (2004-11-08), pages 902 - 907, XP010799983, ISBN: 978-0-7803-8775-1, DOI: 10.1109/TDC.2004.1432502

## Beschreibung

Die Erfindung betrifft eine Überwachungsanordnung gemäß dem Oberbegriff des Anspruchs 1 sowie ein Verfahren zur Überwachung gemäß dem Oberbegriff des Anspruchs 6.

Im Zuge der immer stärkeren Vernetzung von Geräten im Internet, dem sog. "Internet of Things", werden derzeit immer mehr Geräte direkt untereinander durch Maschine-zu-Maschine Schnittstellen verbunden. Im Bereich der Industrieautomatisierung werden beispielsweise unter dem Schlagwort "Industrie 4.0" Fertigungsstraßen als sog. "Cyber-Physcial-Systems" simuliert, um in Echtzeit die Produktion von Waren überwachen und optimieren zu können.

Auch im Bereich der Energietechnik ist es erstrebenswert, vormals nicht fernüberwachbare Geräte wie z.B. Hochspannungstransformatoren über eine Datenkommunikation von außen überwachen zu können. Aus der Produktbroschüre "High-Voltage Products - Reliable products for all customer requirements", Siemens AG 2016, Article No. EMHP-B10010-00-7600, Dispo 30002 003000/78455 | 0516, sind eine Reihe von Hochspannungsgeräten wie Überspannungsableiter (Seite 36 ff.), Leistungsschalter und Gas-isolierte Schaltanlagen (Seite 84 ff.) bekannt. Diese Geräte sind teilweise bereits heute oder werden demnächst mit Sensoren zur Überwachung des jeweiligen Betriebszustands ausgerüstet. Dies ist ebenfalls aus JUNGT ET AL: "Implementation of new monitoring tools and optimisation of maintenance through the use of Web-based technology", TRANSMISSION AND DISTRIBUTION CONFERENCE AND EXPOSITION: LATIN AMERICA, 2004 IEEE/PES SAO PAULO, BRAZIL 8-11 NOV. 2004, PISCATAWAY, NJ, USA, IEEE, US, 8.Nov.2004, Seiten 902-907, DOI: 10.1109/TDC. 2004.1432502, ISBN: 978-0-7803-8775-1 bekannt.

Zur Übertragung und Bündelung der mittels der Sensoren erfassten Sensorsignale des jeweiligen Hochspannungsgerätes wird typischerweise ein Gerät verwendet, dass die Sensorsignale in eine Internetumgebung transferiert ("IoT Device"). Aus den Datenblättern "Sensformer^{™} Connectivity Device" und "Sensformer^{™} Connectivity Device, outdoor version" sind solche Geräte bekannt. Beide Modelle weisen eine begrenzte Anzahl von Eingängen bzw. Schnittstellen auf (z.B. drei Analoge und zwei Digitale Eingänge) sowie eine Reihe von Kommunikationsmöglichkeiten wie z.B. Ethernet, USB, oder Funk (GSM) auf.

An die Erfindung stellt sich ausgehend von den bekannten "Senseformer Connectivity Devices" die Aufgabe, eine Überwachungsanordnung anzugeben, mit der vergleichsweise umfassend und effizient eine genaue Fernüberwachung von elektrischen Betriebsmitteln ermöglicht wird.

Die Erfindung löst diese Aufgabe durch eine Überwachungsanordnung gemäß Anspruch 1.

Ein elektrisches Betriebsmittel im Sinne der Erfindung ist beispielsweise ein Leistungsschalter oder ein Trenn- und Erdungsschalter .

Es kann sich bevorzugt um eine elektrische Anlage für Hochspannung, also Spannungen über 1 kV, handeln.

Es können jedoch erfindungsgemäß auch Produkte der Mittelspannung (unter 1 kV Nennspannung) überwacht werden.

Eingangseinrichtungen können beispielsweise analoge Eingänge, digitale Eingänge und Kabelanschlüsse (z.B. ein Widerstandstemperatursensor "resistance temperature detector" wie etwa ein RTD-PT100 Kanal) aufweisen.

Die Rechnereinrichtung weist beispielsweise Prozessormittel und/oder Datenspeichermittel auf, um die erfassten Messdaten in digitaler Form zusammenzufassen und für die Übermittlung vorzubereiten.

Als Kommunikationseinrichtung kann eine Kommunikationseinrichtung für eine der folgenden Kommunikationsmittel vorgesehen werden: Ethernet, USB, Serial interface 1x RS485, Funk über eine Antenneneinrichtung, long range radio, NFC, W-LAN, Mobilfunk per SIM Karte, z.B. GSM, 3G, 4G (LTE), 5G, power line communication, optische Kommunikation per Lichtwellenleiter.

Bei der Server-Einrichtung kann es sich beispielsweise um eine zentrale Server-Einrichtung wie beispielsweise ein Rechenzentrum oder eine Cloud-Application handeln. Eine Cloud-Application ist im Sinne der Erfindung als ein Computerprogramm zu verstehen, dass sich über ein Datennetzwerk wie dem Internet vernetzter Ressourcen (Prozessoren, Datenspeicher, usw.) bedient. Beispiele sind Microsoft Azure, Amazon Web Services oder Siemens Mindsphere.

Es kann sich alternativ oder parallel bei der Server-Einrichtung auch um eine dezentrale Server-Einrichtung handeln; diese kann beispielsweise als in einer Substation lokal vorhandene Rechnereinrichtung verstanden werden.

In einer bevorzugten Ausführungsform der erfindungsgemäßen Überwachungseinrichtung weist das elektrische Betriebsmittel einen elektrischen Leistungsschalter auf, und die Schalterkontakte weisen Hilfsschalterkontakte auf. Die Erfassung der durchgeführten Schaltvorgänge von Leistungsschaltern von gasisolierter Schaltanlagen und von Freiluftschaltern erfolgte bisher im Stand der Technik mittels eines elektromechanischen Zählers, der im Leistungsschalter-Antriebsschrank installiert ist. Die Anlagenbetreiber erfassten durch visuelle Kontrollen der sog. Schaltspielzähler die Anzahl der Schalthandlungen bzw. Schaltspiele der Leistungsschalter. Ein Schaltspiel ist dabei ein Gesamtvorgang aus Einschalten und Ausschalten.

Wenn der Leistungsschalter mehrphasig, z.B. 3-phasig ausgelegt und mit jeweils einer Unterbrechereinheit pro Phase zur elektrischen Trennung ausgerüstet ist, so kann erfindungsgemäß ein einzelner Hilfsschalterkontakt überwacht werden, wenn die jeweiligen Unterbrechereinheiten für jede Phase mechanisch gekoppelt sind. Alle drei Phasen sind in diesem Fall mit einem gemeinsamen Schalterantrieb ausgestattet ("common drive"). Entsprechend kann die Schalterstellung für alle Phase über einen Hilfskontakt erfasst werden.

Alternativ kann der Leistungsschalter auch derart gestaltet sein, dass jede Unterbrechereinheit mit einem eigenen Antrieb ausgestattet ist ("single pole drive"). Entsprechend kann eine Überwachung von Schalthandlungen an einem Hilfsschalterkontakt pro Phase erfindungsgemäß erfolgen. Vorteilhaft kann jedoch eine Reihenschaltung von mehreren Hilfsschalterkontakten vorgenommen werden, weil dies es ermöglicht, mit nur einer Eingangseinrichtung alle drei Phasen zu überwachen.

Der Anlagenbetreiber muss sicherstellen, dass ein Leistungsschalter über die gesamte Betriebsdauer nicht häufiger geschaltet wird als eine vom Hersteller typbedingt vorher festgelegte definierte max. Anzahl von Schalthandlungen. Wird dieser definierte Grenzwert nicht eingehalten, so droht das Betriebsmittel zu versagen. D.h. schlimmstenfalls wird der bei einer Schalthandlung normalerweise "kontrollierte" Lichtbogen bei einer EIN- bzw. AUS-Schaltung nicht mehr ordnungsgemäß gelöscht. Dies führt zu einem Störlichtbogen mit weitreichenden Schäden am Betriebsmittel und ggf. sogar Personenschäden.

Die Anzahl der getätigten Schalthandlungen wurde bisher nicht digital erfasst, d.h. eine systematische Erfassung existierte nicht. Durch die Überwachung der Hilfsschalterkontakte wird erstmals durch die Erfindung eine zeitaktuelle Fernüberwachung des Schalterzustands ermöglicht, was einen großen Vorteil für die Sicherheit und Verfügbarkeit im Energienetz bedeutet. Technisch wird dies realisiert, indem frei verfügbare Hilfsschalterkontakte im Leistungsschalter-Antriebsschrank verwendet werden. Die Erfassung einer Schalthandlung und einer Schaltstellung wird mit einem gemeinsamen Hilfsschalter realisiert. Bei einer Schalthandlung ändert sich der Zustand des Schalters (offen / geschlossen).

In einer bevorzugten Ausführungsform der erfindungsgemäßen Überwachungseinrichtung ist eine Eingangseinrichtung ausgebildet, eine Hilfsschalterstellung zu überwachen, die angibt, ob eine Einschaltfeder des Leistungsschalters gespannt ist. Dabei kann wie eingangs im Zusammenhang mit der Überwachung von Schalthandlungen erläutert bei mehrphasigem Aufbau des Leistungsschalters und "common drive", d.h. einen Antrieb alle Unterbrechereinheiten, ein einzelner Hilskontakt überwacht werden. Bei einem "single pole drive", d.h. einem eigenen Antrieb pro Phase, kann durch Reihenschaltung der Hilfsschalterkontakte ebenfalls mit nur einer Eingangseinrichtung eine Überwachung des Zustands aller Einschaltfedern der jeweiligen Unterbrechereinheiten erreicht werden.

Mit anderen Worten wird für die Information, ob der Leistungsschalter in "EIN" (geschlossen) geschaltet werden kann, ein weiterer Hilfsschalter im Leistungsschalterschrank überwacht. Erst wenn die Einschaltfeder des Leistungsschalter gespannt ist und die Gasdichte eines Schutzgases innerhalb vorgesehener Betriebsbedingungen liegt, ist der Leistungsschalter zum Einschalten bereit. Geeignete Gasdichte-Sensoren sind beispielsweise aus den Produktbroschüren "8781/82/83 Hybrid Gas density monitoring" und "8791/92/93 Hybrid Gas density monitor RS485 / Modbus" von trafag sensors controls, Trafag AG, Industriestrasse 11, CH-8608 Bubikon, bekannt. Dabei kann ein Anschluss an eine Eingangseinrichtung per Stromschleife oder per Modbus-Protokoll erfolgen, wobei die Eingangseinrichtungen entsprechend ausgebildet sein müssen.

In einem solchen Fall liegt keine lokale Sperrung ("Interlocking" nicht aktiv) vor. Die Einschaltbereitschaft (und die Gasdichte) können erfindungsgemäß in der Server-Einrichtung ausgewertet und einem Benutzer über eine Anzeigeeinrichtung z.B. eines mobilen Endgeräts angezeigt werden. Besonders bevorzugt ist es, wenn auch Informationen über nicht-lokale, feldübergreifende und anlagenspezifische Verriegelungsbedingungen (z.B. Leistungsschalter darf nicht geschlossen werden, weil er auf Erde schließen würde) bereitgestellt werden. Diese Informationen können aus einer Leitstelle oder einem lokalen Schutzgerät ausgelesen und dem Benutzer bereitgestellt werden.

Für den Fall, dass die Gasdichte des Schutzgases des Leistungsschalter abfällt (den Schwellenwert für die minimale Gasdichte im Betrieb erreicht), kann i.d.R. noch eine Schalthandlung zum Öffnen (oder ggf. Schließen) des Schalters automatisiert durchgeführt - auch wenn ansonsten bereits Interlocking bereits vorläge. Dies erhöht die Sicherheit.

In einer weiteren bevorzugten Ausführungsform der erfindungsgemäßen Überwachungseinrichtung weist die mindestens eine Eingangseinrichtung einen Digitalen Eingang auf. Dies ist ein Vorteil, weil der digitale Eingang auf besonders einfache Weise eine Erkennung des Zustands der Hilfsschalterkontakte ermöglicht (z.B. mit anliegender Spannung an den Hilfsschalterkontakten - Schalter geschlossen; ohne anliegende Spannung an den Hilfsschalterkontakten - Schalter offen). In erster Näherung kommt es also bei der Auswertung der digitalen Eingänge nicht auf die Höhe der anliegenden Spannung oder sonstiger Parameter an, sondern lediglich, ob eine solche Spannung überhaupt anliegt ("0" oder "1").

Bevorzugt ist jeder digitale Eingang für Spannungen zwischen 20 V bis 300 V, besonders bevorzugt zwischen 28 V bis 280 V, noch mehr bevorzugt zwischen 48 V und 250 V, ausgelegt. Dabei können Gleichspannungen oder Wechselspannungen (Spannungsangaben dann auf "root-mean-square" bezogen) anliegen.

Dabei kann insbesondere bei Gleichspannung der digitale Eingang jeweils Spannungsänderungen von niedrig (oder null volt) zu hoch und umgekehrt erkennen. Bevorzugt werden Änderungen mit sekundengenauer Auflösung erfasst. Bei Gleichspannung kann zusätzlich z.B. eine positive Pulsweite erfasst werden, wobei jeweils der längste Puls festgestellt wird. Besonders bevorzugt ist es, wenn die messbare Pulsweite im Bereich zwischen 10 ms und 100 ms, noch mehr bevorzugt zwischen 20 ms und 50 ms, liegt. Die Messauflösung kann im Bereich von 1 ms liegen. Dabei können Spannungsänderungen, die kürzer als 5 ms dauern, als Kontaktfehler erkannt und (für die weitere Auswertung) ignoriert werden.

Eine hohe Abtastrate stellt sicher, dass alle Schalthandlungen - auch wenn diese bereits nach 10ms bis 20ms abgeschlossen, erfasst werden können.

In einer Weiterbildung dieser Ausführungsform können die eingangs beschriebenen Parameter Pulsweitenbereich, Messauflösung und Dauer von Kontaktfehlern durch einen Benutzer geändert werden. Dies kann beispielsweise durch eine graphische Benutzeroberfläche erfolgen, wobei entweder eine direkte Verbindung z.B. per Kabel an ein Gerät mit Eingangseinrichtung und Rechnereinrichtung erfolgt oder indirekt per Fernparametrierung von der Server-Einrichtung zugegriffen wird.

Es können folglich Spannungen an den Hilfsschalterkontakten als Messdaten erfasst werden. Diese Messdaten können dann in der Rechnereinrichtung für die Übermittlung vorbereitet und zusammengefasst werden. Dabei kann insbesondere ein Zeitstempel hinzugefügt werden, der z.B. ms-genau per GPS zeitsynchronisiert ist. Hierfür kann eine GPS-Signalempfangseinrichtung vorgesehen werden.

In einer weiteren bevorzugten Ausführungsform der erfindungsgemäßen Überwachungseinrichtung sind die Eingangseinrichtung, die Rechnereinrichtung und die Kommunikationseinrichtung in einem gemeinsamen Gehäuse vorgesehen. Das Gehäuse ist lokal an der zu überwachenden Anlage angeordnet. Davon räumlich entfernt ist die Server-Einrichtung angeordnet.

In einer weiteren bevorzugten Ausführungsform der erfindungsgemäßen Überwachungseinrichtung ist die Server-Einrichtung ausgebildet, anhand der verarbeiteten Messdaten eine Anzahl bisher erfolgter Schalthandlungen und/oder Schaltspiele zu bestimmen. Alternativ oder zusätzlich kann bereits lokal in der Rechnereinrichtung eine Schalthandlung und/oder ein Schaltspiel erkannt und mit einem Zeitstempel versehen werden.

In der erfindungsgemäßen Überwachungseinrichtung ist die Server-Einrichtung ausgebildet, anhand der verarbeiteten Messdaten eine Schaltstellung der elektrischen Anlage zu erfassen und/oder anhand der verarbeiteten Messdaten zu erkennen, ob der Schalter bereit ist, geschlossen zu werden. Eine Schaltstellung ist dabei z.B. die Information, ob ein Leistungsschalter geöffnet oder geschlossen ist.

In der erfindungsgemäßen Überwachungseinrichtung ist die Server-Einrichtung ausgebildet, anhand einer Zeitabschnittsreihe von für den jeweiligen Zeitabschnitt bestimmten erfolgten Schalthandlungen und/oder Schaltspielen eine lineare Fortschreibung zukünftig erwarteter Anzahlen von Schalthandlungen und/oder Schaltspielen für zukünftige Zeitabschnitte zu berechnen, und
anhand der linearen Fortschreibung einen Wartungszeitpunkt zu bestimmen, an dem das elektrische Betriebsmittel eine vorher festgelegte Höchstzahl von Schalthandlungen und/oder Schaltspielen erreichen wird. Ein Zeitabschnitt kann beispielsweise ein Monat oder ein Jahr sein, ggf. auch eine Woche. Eine Zeitabschnittsreihe ist bei jährlicher Zählung beispielsweise so zu verstehen, dass im Jahr 2010 151 Schalthandlungen durchgeführt wurden, im Jahr 2011 321 Schalthandlungen und im Jahr 2012 198 Schalthandlungen durchgeführt wurden. Eine lineare Fortschreibung würde entsprechend per linearer Regression einen Erwartungswert für zukünftige Schalthandlungen in 2013 ermitteln usw. Dabei würde in einem zukünftigen Zeitabschnitt die Herstellerangabe zur maximal zulässigen Anzahl von Schalthandlungen überschritten, woraus sich der Wartungszeitpunkt ergibt. Unter Wartungszeitpunkt im Sinne der Erfindung ist derjenige Zeitpunkt zu verstehen, an dem der Schalter seine vorgesehene Lebensdauerbelastung erreicht hat und ausgetauscht oder teilerneuert werden muss. Dies ist ein Vorteil, weil zentral und automatisch eine Zustandsüberwachung für eine elektrische Anlage bereit gestellt werden kann. Häufiges manuelles Ablesen von lokalen Schaltzählern und/oder kostspielige Geräteausfälle durch unbeobachteten Verschleiß werden vermieden.

Es kann beispielsweise automatisch an den Betreiber des Betriebsmittels ein Angebot zur Wartung unterbreitet werden. Anschließend kann durch einen Techniker eine Wartung oder ein Austausch vorgenommen werden. Derzeit sind Revisionszeitpunkte, also Termine zum Öffnen und manuellen Kontrollieren eines Leistungsschalters, i.d.R. durch nationale Regulierungen starr vorgeschrieben. Dennoch könnte zukünftig auch eine Bestimmung des Revisionszeitpunkts in Abhängigkeit von der bisherigen Beanspruchung durch Schalthandlungen erfindungsgemäß erfolgen. Ferner könnte zukünftig die Prognose des Wartungszeitpunkts und/oder Revisionszeitpunkts noch weiter verfeinert werden, indem ein digitaler Zwilling des Betriebsmittels bzw. des Leistungsschalters mittels der Server-Einrichtung simuliert wird. Dabei kann anhand von Strommesswerten, die entweder direkt vom Betriebsmittel ausgelesen oder indirekt von einer Leitstelle wie z.B. einem sog. "Supervisory Control and Data Aquisition" (SCADA) System bereit gestellt werden, eine Alterungsfunktion basierend auf der tatsächlichen elektrischen Belastung, die sich aus jeder einzelnen individuellen Schalthandlung ergab, berechnet werden. Diese Alterungsfunktion kann zur noch feineren Bestimmung des Wartungszeitpunkts eingesetzt werden bzw. dieser Wartungszeitpunkt kann beispielsweise noch weiter in die Zukunft geschoben werden, wenn die bisherige elektrische Beanspruchung dies erlaubt. Dadurch kann das Betriebsmittel länger betrieben werden, was Kosten einspart und die Verfügbarkeit des Energienetzes erhöht.

In einer weiteren bevorzugten Ausführungsform der erfindungsgemäßen Überwachungseinrichtung ist die Server-Einrichtung ausgebildet, die lineare Fortschreibung auf alle bisherigen Zeitabschnitte zu beziehen. Dies ist ein Vorteil, weil Durchschnittswerte für Schalthäufigkeiten über die gesamte bisherige Betriebszeit bestimmt werden, was eine besonders ausgewogene Schätzung ermöglicht.

In einer weiteren bevorzugten Ausführungsform der erfindungsgemäßen Überwachungseinrichtung ist die Server-Einrichtung ausgebildet, die lineare Fortschreibung auf den zeitlich letzten bisherigen Zeitabschnitt zu beziehen. Dies ist ein Vorteil, weil der letzte Zeitabschnitt besonders hoch gewichtet ist und damit der Wartungszeitpunkt besonders genau auf eine gerade zurück liegende Beanspruchung bezogen ist.

In einer weiteren bevorzugten Ausführungsform der erfindungsgemäßen Überwachungseinrichtung ist die Server-Einrichtung ausgebildet, die lineare Fortschreibung auf eine Auswahl bisheriger Zeitabschnitte zu beziehen. Die Auswahl kann beispielsweise durch einen Nutzer festgelegt werden. Beispielsweise können Zeitabschnitte auch von der Berücksichtigung ausgeschlossen werden, wenn z.B. Fehler und Netzausfälle in den jeweiligen Zeitabschnitten ungeplant das Schaltaufkommen erhöhten.

In einer weiteren bevorzugten Ausführungsform der erfindungsgemäßen Überwachungseinrichtung sind zusätzliche Eingangseinrichtungen zur Erfassung von Messdaten der elektrischen Anlage vorgesehen, wobei mindestens einer der folgenden Parameter überwacht wird: max. zulässiger Primärstrom, Umgebungstemperatur, Gasdruck und
Gasdichte eines Schutzgases, Innentemperatur eines Schaltschranks. Als Schutzgas kann beispielsweise Schwefelhexafluorid (SF6) oder sog. "clean air" (entfeuchtete und im wesentlichen staubfreie Luft) eingesetzt werden.

An die Erfindung stellt sich ferner ausgehend von den bekannten "Senseformer Connectivity Devices" die Aufgabe, ein Verfahren anzugeben, mit dem vergleichsweise umfassend und effizient eine genaue Überwachung von elektrischen Anlagen ermöglicht wird.

Die Erfindung löst diese Aufgabe durch ein Verfahren gemäß Anspruch 6. Bevorzugte Ausführungsformen sind in den Ansprüchen 7 bis 10 beschrieben. Dabei ergeben sich für das erfindungsgemäße Verfahren und seine Ausführungsformen jeweils sinngemäß die gleichen Vorteile wie eingangs für die erfindungsgemäße Überwachungsanordnung erläutert. Dabei kann der Fachmann sämtliche im Zusammenhang mit der Überwachungsanordnung offenbarte Varianten der Erfindung auch ohne Weiteres im erfindungsgemäßen Verfahren einsetzen.

Zur besseren Erläuterung der Erfindung zeigen in schematischer Darstellung die
- Figur 1: ein erstes Ausführungsbeispiel der Erfindung, und
- Figur 2: eine erste Ansicht einer Benutzeroberfläche, die eine Lebensdauerprognose eines Leistungsschalters anzeigt.

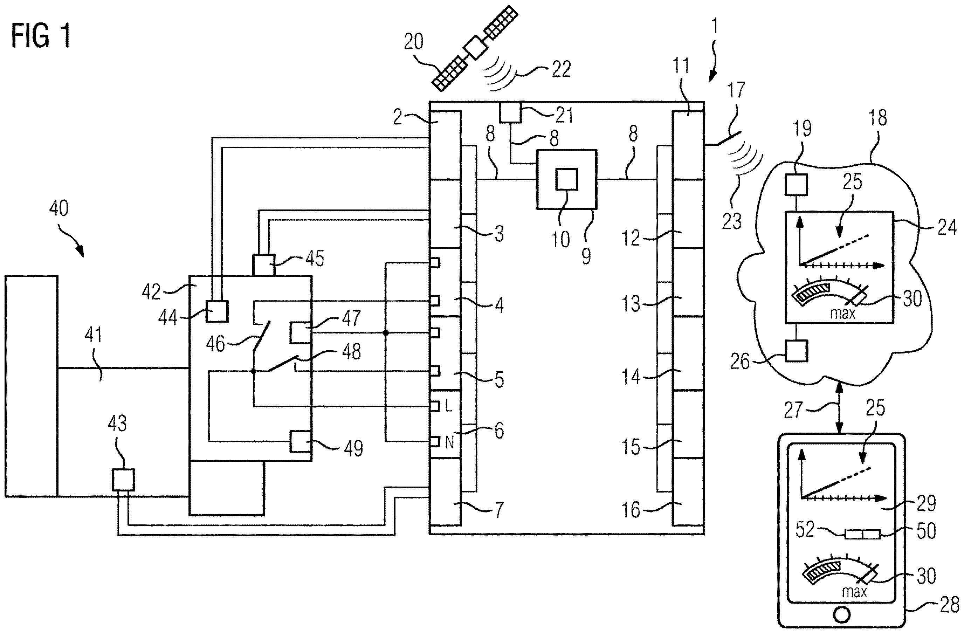

Die Figur 1 zeigt ein erstes Ausführungsbeispiel der Erfindung. Ein elektrischer Leistungsschalter 40 für Hochspannungen (über ein kV) weist einen Gasraum 41 auf, der mit einem elektrisch isolierenden Schutzgas befüllt ist. Es kann typischerweise Schwefelhexafluorid (SF₆) unter hohem Druck oder gereinigte Luft ("clean air") eingesetzt werden. An dem Gasraum 41 ist ein Schaltschrank 42 mit einem Schalterantrieb und einer Steuereinrichtung (jeweils nicht dargestellt) angeordnet. Der Schaltschrank 42 weist unter anderem zwei Hilfsschalterkontakte 46,48 auf. Die Hilfsschalterkontakte 46,48 sind in diesem Ausführungsbeispiel mit einer Gleichspannung von 48 bis maximal 250 Volt beaufschlagt. Diese Gleichspannung wird dabei jeweils von Speisespannungserzeugungsmitteln 47,49 bereitgestellt; dabei handelt es sich um zwei Pole einer Gleichspannungsquelle. Eine Wandlung oder Transformation im Schaltschrank 42 findet nicht statt, d. h. die volle beaufschlagte Spannung liegt an den Hilfsschalterkontakten 46,48 an. Der Hilfsschalterkontakt 48 zeigt die Schalterstellung der Leistungsschalterkomponenten bzw. Unterbrechereinheit(en) im schutzgasisolierten Gasraum 41 an. Der Schalter 48 ist im Beispiel geöffnet dargestellt. Dies bedeutet, dass auch die Leistungsschalterkomponenten (nicht dargestellt) im Gasraum 41 geöffnet und damit eine elektrische Trennung herbeigeführt ist. Ist der Schalter 48 geschlossen, so sind auch die Leistungsschalterkomponenten im Gasraum 41 elektrisch leitend verbunden. Ist der Schalter 48 geschlossen, so liegt die eingangs genannte Nennspannung zwischen 48 und 250 Volt Gleichspannung an dem Hilfsschalterkontakt 48 an.

Der Schalter 46 weist Hilfsschalterkontakte auf, die den Zustand der Feder des Leistungsschalterantriebes angeben können. Ist der Schalter 46 wie im Beispiel dargestellt offen, so ist die Feder entspannt. Ist dagegen der Hilfsschalter 46 geschlossen, und liegt die Speisespannung zwischen 48 und 150 Volt entsprechend an, so ist die Feder gespannt und der Leistungsschalter zum Schließen bereit.

Der Leistungsschalter 40 weist mehrere Sensoren 43,44,45 auf. Der Sensor 44 ist ein Temperatursensor, der im Schaltschrank 42 innen angeordnet ist und die dortige Temperatur misst. Der Temperatursensor 44 ist mit einer Eingangseinrichtung 2 per Kabel verbunden. Ein zweiter Temperatursensor 45 ist über Kabel mit einer weiteren Eingangseinrichtung 3 verbunden. Der Hilfsschalter 46 ist mit einem Eingang einer digitalen Eingangseinrichtung 4 verbunden. Der Hilfsschalter 48 ist mit einer anderen digitalen Eingangseinrichtung 5 per Kabel verbunden. An den digitalen Eingangseinrichtungen 4,5 liegt damit jeweils im geschlossenen Zustand der Schalter über die Hilfsschalterkontakte 46,48 die jeweilige Speisespannung an.

Des Weiteren weist der Leistungsschalter 40 einen Gasdichte-Sensor 43 auf, der mit einer Eingangseinrichtung 7 verbunden ist.

Die Eingangseinrichtungen 3,4,5,6,7 sind in einem wetterfesten Gehäuse eines Geräts angeordnet. Innerhalb des Gerätes ist eine Rechnereinrichtung 9 mit einem Datenspeicher 10 vorgesehen. Diese dient zum Verarbeiten der in den Eingangseinrichtungen eintreffenden Messdaten, bzw. Sensorwerten. Bei den an den Hilfsschalterkontakten 46,48 anliegenden Spannungen wird dabei durch die digitalen Eingangseinrichtungen 4,5 jeweils nur das Signal "0" oder "1" ausgegeben, d. h., dass entweder eine Spannung anliegt und der Schalter geschlossen ist oder dass keine Spannung anliegt und der Schalter entsprechend geöffnet ist.

Das Gerät weist weiterhin eine GPS-Einrichtung 21 auf, die in der Lage ist, von einem Global-Positioning-System-Satelliten 20 Zeitinformationen 22 zu empfangen. Die empfangene Uhrzeit wird über eine Datenleitung 8 in die Rechnereinrichtung 9 eingespeist. Ebenso werden die Messdaten über eine Datenleitung 8 in die Rechnereinrichtung eingespeist. Die Rechnereinrichtung ist ausgebildet, die Messdaten zur Übertragung vorzuverarbeiten, zusammenzufassen, und gegebenenfalls mit einem Zeitstempel der GPS-Einrichtung 21 zu versehen. Über eine weitere Datenkommunikationsleitung 8 ist die Rechnereinrichtung mit Kommunikationseinrichtungen 11,12,13,14,15,16 verbunden, welche zur Übermittlung der verarbeitenden Messdaten nach extern dienen. Hierfür weist die Kommunikationseinrichtung 11 eine Funkantenne 17 zur Übertragung von LTE-Signalen 23 auf. Weitere Kommunikationseinrichtungen 12,13,14,15,16 können z.B. für Ethernet, USB, Serial interface 1x RS485, Funk über eine Antenneneinrichtung, long range radio, NFC, W-LAN, Mobilfunk per SIM Karte, z.B. GSM, 3G, 4G (LTE), 5G, power line communication, "narrow-band IoT" (NB-IoT), bluetooth oder optische Kommunikation per Lichtwellenleiter ausgebildet sein.

Das Gerät ist somit als eine "Internet of Things"-Verbindungsbox lokal am Leistungsschalter 40 angeordnet. Sie dient dazu, eine Vielzahl von Informationen aus Sensoren und Hilfsschalterkontakten des Leistungsschalter 40 abzuleiten, zusammenzufassen und zur weiteren Auswertung weiterzuleiten.

Eine Server-Einrichtung 18 ist als Cloud-Applikation mit verteilten Computern und Datenspeicherressourcen ausgebildet. Die Server-Einrichtung 18 weist eine Empfangseinrichtung 19 zum Empfang der LTE-Signale 23 auf. Diese werden in eine Rechnereinrichtung 24 übermittelt und dort ausgewertet. Dabei werden insbesondere die über den Hilfsschalterkontakt 48 festgestellten Schalthandlungen in einer Zeitabschnittsreihe aufsummiert, sodass beispielsweise die jährliche Endsumme der getätigten Schalthandlungen dargestellt ist. Da es sich um eine ständige Aufsummation handelt, wächst die Anzahl der Schalthandlungen mit jedem Zeitabschnitt wie beispielsweise einem Jahr stetig an.

Anhand einer linearen Fortschreibung des bisherigen Trends, beispielsweise basierend auf einer Regression über den gesamten bisherigen Zeitraum seit Installation des Leistungsschalters 40 und/oder des Geräts, kann erkannt werden, wann das elektrische Betriebsmittel eine vorher festgelegte Höchstzahl von Schalthandlungen erreichen wird. In der unteren "Cockpit-Ansicht" 30 ist dieses noch einmal visualisiert. Dabei ist mit "max." die maximale Anzahl von Schalthandlungen für diesen Anlagentyp, z. B. 10.000 Schalthandlungen, angegeben. Der schraffierte Bereich deutet an, das bisher erst etwas über die Hälfte der maximalen Schalthandlungen mit dem Leistungsschalter 40 durchgeführt wurden. Diese Informationen können durch die Server-Einrichtung 18 mittels einer Kommunikationseinrichtung 26 über eine Kommunikationsverbindung wie z. B. das Internet 27 an ein mobiles Endgerät 28 mit Anzeigemitteln 29 übertragen werden.

Dabei handelt es in diesem Beispiel um ein Tablet 28. Auf dem Tablet werden für einen Benutzer, wie beispielsweise einem Techniker, der die Schaltanlage untersucht, die Abbildungen 25 und 30 auf dem Anzeigemittel 29 dargestellt. Ferner ist in einem Fenster 52 dargestellt, dass die visualisierten Daten mit einem bestimmten Zeitstempel aktualisiert wurden, und in einem weiteren Feld 50 ist dargestellt, wann zuletzt eine Kalkulation des Wartungszeitpunkts bzw. des Erreichens der maximalen Anzahl von Schalthandlungen berechnet wurde.

Beispielsweise kann auf dem mobilen Endgerät 28 eine App vorgesehen werden, die mit einer entsprechenden Datenverarbeitungs-App auf der Server-Einrichtung 18 kommuniziert. Es werden in der App jeweils die aufsummierten Schaltvorgänge als Zeitserie und die maximal zulässige Schaltanzahl dargestellt. Über diese Trendbetrachtung wird die mechanische Restlebensdauer des Leistungsschalter 40 berechnet.

Es wird ferner eine Exportfunktion zur externen Sicherung dieser historischen Daten gemäß Diagramm 25 ermöglicht, um für einen Kunden bzw. einen Hersteller der Anlage eine erweiterte Datenbearbeitung und Datenanalyse bereitzustellen. Werden über die Eingangseinrichtungen 2,3,4,5,6,7 alle eingangs beschriebenen Sensorinformationen bzw. Messdaten an die Server-Einrichtung 18 übertragen, so kann anhand der beschriebenen Informationen erstens eine Anzahl getätigter Schalthandlungen und/oder Schaltspiele, zweitens die aktuelle Schaltstellung sowie drittens die Einschaltbereitschaft des Leistungsschalters festgestellt werden.

Mit diesen Informationen lassen sich Wartungen besser planen. Ferner können Betriebsmittel wie Leistungsschalter homogener ausgelastet werden. Dies greift beispielsweise, wenn ein Betriebsmittel deutlich mehr Schalthandlungen durchgeführt hat, als ein äquivalentes Betriebsmittel auf der gleichen Station. Ferner können Ferndiagnosen erleichtert durchgeführt werden. Die vorliegende Erfindung hat den Vorteil, dass anders als bisher der Anlagenbetreiber kein Personal mehr zu den jeweiligen Umspannwerken, Schaltanlagen, etc. senden muss, um manuell eine Anzahl der getätigten Schalthandlungen ablesen zu lassen.

Hieraus ergeben sich weiterhin folgende Vorteile:
Durch die digitale und automatisierte Methode der Informationserfassung bzw. des Betriebszustands des Leistungsschalters kann eine kontinuierliche Ablesung des Betriebszustandes ermöglicht werden.

Ferner können keine Ablesefehler mehr auftreten.

Des Weiteren muss der Anlagenbetreiber nicht mehr die Zugänglichkeit und gegebenenfalls die Freischaltung des Leistungsschalters 40 für die Ablesung gewährleisten, was enorme Zeitersparnis bedeutet.

Es wird des Weiteren Zeit eingespart, weil eine Übertragung von Notizen auf Papier in eine digitale Datenbank entfällt.

Ein weiterer Vorteil ist es, dass die oben beschriebenen Informationen nahezu in Echtzeit innerhalb der genannten App präsentiert werden können.

Insbesondere bei schlecht erreichbaren Anlagen wie z. B. den Offshore-Plattformen von Windparks, welche zeitaufwändige Vorkehrungen und Sicherheitsvorgaben und damit höhere Kosten für eine Anlagenbegehung erforderlich machen, kann die Erfindung mit Vorteil eingesetzt werden.

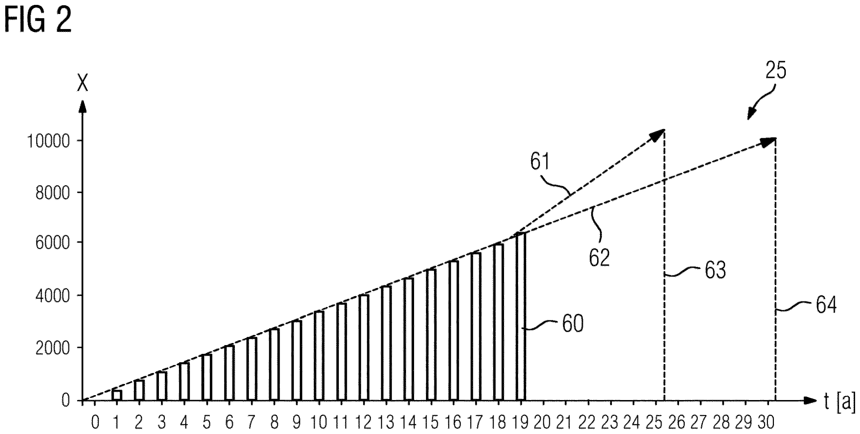

Die Figur 2 zeigt eine erste Ansicht einer Benutzeroberfläche, die eine Lebensdauerprognose eines Leistungsschalters anzeigt. Die Abbildung 25 zeigt auf der waagerechten Achse die Zeit in Jahren von 0 bis 30 Jahre Betriebsdauer des Leistungsschalters 40 gemäß Figur 1. Die senkrechte Achse X zeigt die Anzahl bisher durchgeführter Schalthandlungen, wobei das Maximum bei 10.000 Schalthandlungen als vom Hersteller vorgegebenes Lebensdauermaximum vorgesehen ist. Die Balken 60 sind für jedes Jahr aufgetragen und geben in stetig steigender Weise die bisher aufgetretene aufsummierte Anzahl von Schalthandlungen an. Wird eine lineare Fortschreibung basierend auf allen Jahren 0 bis 19 vorgenommen, so ergibt sich eine lineare Fortschreibung bzw. Regression 62. Diese erreicht nach ca. 30 Jahren die Höchstzahl von 10.000 Schalthandlungen, was mit der gestrichelten Linie 64 angedeutet ist. Basierend auf dieser Schätzung verbleiben folglich von Jahr 19 bis Jahr 30 noch 11 Betriebsjahre. Wird davon abweichend eine Lebensdauerprognose 61 basierend lediglich auf einer linearen Fortschreibung des Anstiegs der Schalthandlungen im letzten Jahr, d. h. von Jahr 18 auf Jahr 19, angesetzt, so ergibt sich entsprechend der gestrichelten Linie 63 eine verkürzte Lebensdauer von 6 weiteren Betriebsjahren. Beide Schätzungen können einem Benutzer mit Vorteil präsentiert werden, da anzunehmen ist, dass die tatsächlich verbleibende Betriebszeit zwischen diesen beiden Extremen (zwischen 25 und 30 Jahren) liegen wird.

## Patentansprüche

1. Überwachungsanordnung (1), aufweisend
- ein elektrisches Betriebsmittel mit Schalterkontakten (46,48),
- mindestens eine Eingangseinrichtung (3,4,5,6,7) für die Erfassung von an den Schalterkontakten (46,48) anliegenden Spannungen als Messdaten,
- eine Rechnereinrichtung (9) für eine Verarbeitung der Messdaten,
- mindestens eine Kommunikationseinrichtung (11,12,13,14,15,16) zur Übermittlung der verarbeiteten Messdaten,
- eine Server-Einrichtung (18), welche zum Empfang der verarbeiteten Messdaten ausgebildet ist,
wobei
die Server-Einrichtung (18) ausgebildet ist, anhand der verarbeiteten Messdaten eine Anzahl bisher erfolgter Schalthandlungen (60) und/oder Schaltspiele zu bestimmen, oder die Server-Einrichtung (18) ausgebildet ist, anhand der verarbeiteten Messdaten eine Schaltstellung des elektrischen Betriebsmittels zu erfassen,
**dadurch gekennzeichnet,**
**dass** die Server-Einrichtung (18) ausgebildet ist, anhand einer Zeitabschnittsreihe (25) von für den jeweiligen Zeitabschnitt bestimmten erfolgten Schalthandlungen und/oder Schaltspielen eine lineare Fortschreibung zukünftig erwarteter Anzahlen von Schalthandlungen und/oder Schaltspielen für zukünftige Zeitabschnitte (61,62) zu berechnen, und
anhand der linearen Fortschreibung einen Wartungszeitpunkt (63,64) zu bestimmen, an dem das elektrische Betriebsmittel eine vorher festgelegte Höchstzahl von Schalthandlungen (max) und/oder Schaltspielen erreichen wird,
wobei die Überwachungseinrichtung (1) ausgebildet ist, diese Informationen der Server-Einrichtung (18) mittels einer Kommunikationseinrichtung (26) über eine Kommunikationsverbindung an ein mobiles Endgerät (28) mit Anzeigemitteln (29) zu übertragen.

2. Überwachungsanordnung (1) nach Anspruch 1,
**dadurch gekennzeichnet, dass**
das elektrische Betriebsmittel einen elektrischen Leistungsschalter (40) aufweist, und dass die Schalterkontakte Hilfsschalterkontakte (46,48) aufweisen.

3. Überwachungsanordnung (1) nach Anspruch 1 oder 2,
**dadurch gekennzeichnet, dass**
die mindestens eine Eingangseinrichtung einen digitalen Eingang (4,5) aufweist.

4. Überwachungsanordnung (1) nach einem der vorhergehenden Ansprüche,
**dadurch gekennzeichne**t, dass
die Server-Einrichtung (18) ausgebildet ist, die lineare Fortschreibung auf alle bisherigen Zeitabschnitte zu beziehen.

5. Überwachungsanordnung (1) nach einem der Ansprüche 1 bis 3,
**dadurch gekennzeichnet, dass**
die Server-Einrichtung (18) ausgebildet ist, die lineare Fortschreibung auf den zeitlich letzten bisherigen Zeitabschnitt zu beziehen.

6. Verfahren zur Überwachung eines elektrischen Betriebsmittels mit Schalterkontakten (46,48), mit den Schritten:
- Erfassen von an den Schalterkontakten (46,48) anliegenden Spannungen als Messdaten mittels mindestens einer Eingangseinrichtung (2,3,4,5,6,7),
- Verarbeiten der Messdaten mittels einer Rechnereinrichtung (9),
- Übermitteln der verarbeiteten Messdaten mittels mindestens einer Kommunikationseinrichtung (11,12,13,14,15,16),
- Empfangen der verarbeiteten Messdaten mittels einer Server-Einrichtung (18),
wobei
mittels der Server-Einrichtung (18) anhand der verarbeiteten Messdaten eine Anzahl bisher erfolgter Schalthandlungen (60) und/oder Schaltspiele bestimmt wird, **dadurch gekennzeichnet, dass**
mittels der Server-Einrichtung (18) anhand einer Zeitabschnittsreihe (25) von für den jeweiligen Zeitabschnitt bestimmten erfolgter Schalthandlungen und/oder Schaltspielen eine lineare Fortschreibung zukünftig erwarteter Anzahlen von Schalthandlungen (61,62) und/oder Schaltspiele für zukünftige Zeitabschnitte berechnet werden, und dass
anhand der linearen Fortschreibung ein Wartungszeitpunkt (63,64) bestimmt wird, an dem das elektrische Betriebsmittel eine vorher festgelegte Höchstzahl von Schalthandlungen (max) und/oder Schaltspielen erreichen wird,
wobei diese Informationen der Server-Einrichtung (18) mittels einer Kommunikationseinrichtung (26) über eine Kommunikationsverbindung an ein mobiles Endgerät (28) mit Anzeigemitteln (29) übertragen werden.

7. Verfahren nach Anspruch 6,
**dadurch gekennzeichne**t, dass
für das elektrische Betriebsmittel ein elektrischer Leistungsschalter (40) verwendet wird, und dass für die Schalterkontakte Hilfsschalterkontakte (46,48) verwendet werden.

8. Verfahren nach Anspruch 6 oder 7,
**dadurch gekennzeichnet, dass**
für die mindestens eine Eingangseinrichtung ein Digitaler Eingang (4,5) verwendet wird.

9. Verfahren nach einem der Ansprüche 6 bis 8,
**dadurch gekennzeichnet, dass** mittels der Server-Einrichtung (18) die lineare Fortschreibung auf alle bisherigen Zeitabschnitte bezogen wird.

10. Verfahren nach einem der Ansprüche 6 bis 9,
**dadurch gekennzeichne**t, dass
mittels der Server-Einrichtung (18) die lineare Fortschreibung auf den zeitlich letzten bisherigen Zeitabschnitt bezogen wird.

## Claims

1. Monitoring arrangement (1), comprising
- an electrical operating means having switch contacts (46, 48),
- at least one input device (3, 4, 5, 6, 7) for measuring voltages applied to the switch contacts (46, 48) as measurement data,
- a computer device (9) for processing the measurement data,
- at least one communication device (11, 12, 13, 14, 15, 16) for transmitting the processed measurement data,
- a server device (18) designed to receive the processed measurement data,
wherein
the server device (18) is designed to use the processed measurement data to determine a number of previously performed switching actions (60) and/or switching cycles, or the server device (18) is designed to use the processed measurement data to detect a switching position of the electrical operating means, **characterized in that**
the server device (18) is designed to use a set of time periods (25) of performed switching actions and/or switching cycles determined for the respective time period to calculate a linear extrapolation of numbers of switching actions and/or switching cycles expected in the future for future time periods (61, 62), and to use the linear extrapolation to determine a servicing time (63, 64) at which the electrical operating means will reach a previously stipulated maximum number of switching actions (max) and/or switching cycles,
wherein the monitoring device (1) is designed to transmit this information from the server device (18) by means of a communication device (26) via a communication link to a mobile terminal (28) having display means (29).

2. Monitoring arrangement (1) according to Claim 1,
**characterized in that**
the electrical operating means has an electrical circuit breaker (40) and the switch contacts have auxiliary switch contacts (46, 48) .

3. Monitoring arrangement (1) according to Claim 1 or 2,
**characterized in that**
the at least one input device has a digital input (4, 5).

4. Monitoring arrangement (1) according to one of the preceding claims,
**characterized in that**
the server device (18) is designed to apply the linear extrapolation to all of the previous time periods.

5. Monitoring arrangement (1) according to one of Claims 1 to 3,
**characterized in that**
the server device (18) is designed to apply the linear extrapolation to the temporally last previous time period.

6. Method for monitoring an electrical operating means having switch contacts (46, 48), comprising the steps of:
- measuring voltages applied to the switch contacts (46, 48) as measurement data by means of at least one input device (2, 3, 4, 5, 6, 7),
- processing the measurement data by means of a computer device (9),
- transmitting the processed measurement data by means of at least one communication device (11, 12, 13, 14, 15, 16),
- receiving the processed measurement data by means of a server device (18),
wherein
the processed measurement data are used by means of the server device (18) to determine a number of previously performed switching actions (60) and/or switching cycles, **characterized in that**
the server device (18) uses a set of time periods (25) of performed switching actions and/or switching cycles determined for the respective time period to calculate a linear extrapolation of numbers of switching actions (61, 62) and/or switching cycles expected in the future for future time periods, and
the linear extrapolation is used to determine a servicing time (63, 64) at which the electrical operating means will reach a previously stipulated maximum number of switching actions (max) and/or switching cycles,
wherein this information from the server device (18) is transmitted by means of a communication device (26) via a communication link to a mobile terminal (28) having display means (29) .

7. Method according to Claim 6,
**characterized in that**
an electrical circuit breaker (40) is used for the electrical operating means and auxiliary switch contacts (46, 48) are used for the switch contacts.

8. Method according to Claim 6 or 7,
**characterized in that**
a digital input (4, 5) is used for the at least one input device.

9. Method according to one of Claims 6 to 8,
**characterized in that** linear extrapolation is applied to all previous time periods by means of the server device (18).

10. Method according to one of Claims 6 to 9,
**characterized in that**
the linear extrapolation is applied to the temporally last previous time period by means of the server device (18).

## Revendications

1. Système (1) de contrôle, comportant
- un matériel électrique ayant des contacts (46, 48) d'interrupteur,
- au moins un dispositif (3, 4, 5, 6, 7) d'entrée pour la détection comme données de mesure de tensions s'appliquant aux contacts (46, 48) d'interrupteur,
- un dispositif (9) informatique de traitement des données de mesure,
- au moins un dispositif (11, 12, 13, 14, 15, 16) de communication pour la transmission des données de mesure traitées,
- un dispositif (18) serveur, qui est constitué pour la réception des données de mesure traitées,
dans lequel
le dispositif (18) serveur est constitué pour déterminer, à l'aide des données de mesure traitées, un nombre de manipulations (60) de coupure et/ou de durées de service effectuées jusqu'ici, ou le dispositif (18) serveur est constitué pour détecter, à l'aide des données de mesure traitées, une position de coupure du matériel électrique,
**caractérisé**
**en ce que** le dispositif (18) serveur est constitué pour calculer, à l'aide d'une série (25) de laps de temps de manipulations de coupure et/ou de durées de service effectuées déterminées pour le laps de temps respectif, une réévaluation linéaire du nombre escompté dans l'avenir de manipulations de coupure et/ou de durées de service pour des laps de temps (61, 62) à venir, et
à l'aide de la réévaluation linéaire pour déterminer un instant (63, 64) d'entretien où le matériel électrique a atteint un nombre le plus grand fixé à l'avance de manipulations (max) de coupure et/ou de durées de service,
dans lequel le dispositif (1) de contrôle est constitué pour transmettre, à un terminal (28) mobile ayant des moyens (29) d'affichage, ces informations du dispositif (18) serveur au moyen d'un dispositif (26) de communication, en passant par une liaison de communication.

2. Système (1) de contrôle suivant la revendication 1,
**caractérisé en ce que**
le matériel électrique a un disjoncteur (40) électrique, et **en ce que** les contacts d'interrupteur ont des contacts (46, 48) de commutateur auxiliaires.

3. Système (1) de contrôle suivant la revendication 1 ou 2,
**caractérisé en ce que**
le au moins un dispositif d'entrée a un entrée (4, 5) numérique.

4. Système (1) de contrôle suivant l'une des revendications précédentes,
**caractérisé en ce que**
le dispositif (18) serveur est constitué pour rapporter la réévaluation linéaire à tous les laps de temps jusqu'ici.

5. Système (1) de contrôle suivant l'une des revendications 1 à 3,
**caractérisé en ce que**
le dispositif (18) serveur est constitué pour rapporter la réévaluation linéaire au dernier laps de temps jusqu'ici dans le temps.

6. Procédé de contrôle d'un matériel électrique ayant des contacts (46, 48) d'interrupteur, comprenant les stades :
- détection de tensions s'appliquant aux contacts (46, 48) d'interrupteur comme données de mesure au moyen d'au moins un dispositif (2, 3, 4, 5, 6, 7) d'entrée,
- traitement des données de mesure au moyen d'un dispositif (9) informatique,
- transmission des données de mesure traitées au moyen d'au moins un dispositif (11, 12, 13, 14, 15, 16) de communication,
- réception des données de mesure traitées au moyen d'un dispositif (18) serveur,
dans lequel
au moyen du dispositif (18) serveur, on détermine, à l'aide des données de mesure traitées, un nombre de manipulations (60) de coupure et/ou de durées de service effectuées jusqu'ici, **caractérisé en ce que**
au moyen du dispositif (18) serveur, on calcule, à l'aide d'une série (25) de laps de temps de manipulations de coupure et/ou de durées de service effectuées déterminées pour le laps de temps respectif, un réévaluation linéaire de nombre escompté dans l'avenir de manipulations (61, 62) de coupure et/ou de durées de service pour des laps de temps à venir, et **en ce que** l'on détermine, à l'aide de la réévaluation linéaire, un instant (63, 64) d'entretien où le matériel électrique a atteint un nombre le plus grand fixé à l'avance de manipulations (max) de coupure et/ou de durées de service,
dans lequel on transmet ces informations du dispositif (18) serveur à un terminal (28) mobile ayant des moyens (29) d'affichage, au moyen d'un dispositif (26) de communication, en passant par une liaison de communication.

7. Procédé suivant la revendication 6,
**caractérisé en ce que**
l'on utilise un disjoncteur (40) électrique pour le matériel électrique, et **en ce que** l'on utilise des contacts (46, 48) d'interrupteur auxiliaires pour les contacts d'interrupteur.

8. Procédé suivant la revendication 6 ou 7,
**caractérisé en ce que**
l'on utilise une entrée (4, 5) numérique pour le au moins un dispositif d'entrée.

9. Procédé suivant l'une des revendications 6 à 8,
**caractérisé en ce que**
l'on rapporte la réévaluation linéaire à tous les temps jusqu'ici au moyen du dispositif (18) serveur.

10. Procédé suivant l'une des revendications 6 à 9,
**caractérisé en ce que**
l'on rapporte la réévaluation linéaire au dernier, dans le temps, laps de temps jusqu'ici au moyen du dispositif (18) serveur.
